# EUROPÄISCHE PATENTSCHRIFT

(11) **EP 2 274 406 B1**
(45) Veröffentlichungstag und Bekanntmachung des Hinweises auf die Patenterteilung: **02.11.2011**
(21) Anmeldenummer: 09738228.7
(22) Anmeldetag: 30.04.2009
(51) Int. Cl.: C10L 5/44, C10L 5/48

(54) **Verfahren und Vorrichtung zur Herstellung von Brennstoff aus feuchter Biomasse**
Method and apparatus for producing fuel from moist biomass
Procédé et dispositif pour la production de combustible à partir de biomasse humide

(30) Priorität: 02.05.2008 DE 102008021722; 29.07.2008 DE 102008035222
(43) Veröffentlichungstag der Anmeldung: 19.01.2011
(73) Patentinhaber: Werner, Hans, 81825 München (DE)
(72) Erfinder: Werner, Hans, 81825 München (DE)
(74) Vertreter: Leske, Thomas
(86) Internationale Anmeldenummer: PCT/EP2009/055294
(87) Internationale Veröffentlichungsnummer: WO 2009/133184

(56) Entgegenhaltungen:
- WO-A1-2004/067685
- WO-A2-2004/060868
- DE-A1-102005 004 634
- US-A- 4 421 022

## Beschreibung

Gegenstand der vorliegenden Erfindung sind ein Verfahren, eine Vorrichtungen sowie die Verwendung einer solchen Vorrichtung zur Herstellung von in Form gepresstem Brennstoff aus feuchter Biomasse aller Art, wie land-, forst- und gartenwirtschaftlichen Produkten einschließlich Abfällen, beispielsweise auch Grasschnitt, Gärtnerei- oder Küchenabfällen, Abfällen aus der industriellen Verarbeitung von Biomasse wie beispielsweise der Lebensmittelverarbeitung, der Papierherstellung oder ähnlichem.

Derartige Verfahren und Vorrichtungen zu ihrer Durchführung sind - beispielsweise aus WO 2004/067685 A 1 - bekannt.

Diese Verfahren umfassen beispielsweise vor dem abschließenden Formpressvorgang zur Herstellung des in Form gepressten Brennstoffs einen Trocknungsvorgang, vor dem Trocknungsvorgang einen Pressvorgang zur Reduktion des Feuchtegehalts und vor dem Pressvorgang einen ersten Zerkleinerungsvorgang, durch den die Effizienz des anschließenden Pressens, d.h. die dadurch mögliche Verringerung des Wassergehalts der feuchten Biomasse erhöht wird.

Die Vorrichtungen zur Durchführung dieser Verfahren sind gemäß diesen Verfahrenserfordernissen aufgebaut.

Gegenüber der herkömmlichen als Brennstoff eingesetzten trockenen oder weitgehend trockener Biomasse wie etwa Holz oder auch gegenüber etwa auf dem Feld vorgetrockneter Biomasse wie etwa Heu hat feuchte Biomasse in ihrer Verarbeitung zu Brennstoff verschiedene Vorteile. Zum einen fällt feuchte Biomasse überall in großer Menge an, oft ohne dass eine andere Nutzung in Betracht käme, so dass sie entsorgt, zum Beispiel kompostiert werden müsste, wenn sie nicht zu Brennstoff verarbeitet werden oder gar vor Ort ohne energetische Nutzung verrotten würde.

Gegenüber vorgetrockneter hat die feucht verarbeitete Biomasse den Vorteil, dass Masseverluste, wie sie - etwa durch Ausfall der Saat - bei der Feldtrocknung entstehen, vermieden werden.

Vor allem aber verbleiben die verbrennungstechnisch schädlichen Stoffe, die in der Biomasse enthalten sind und die - wie beispielsweise Chlor - die Korrosion der Brennanlagen beschleunigen oder die das Ascheverhalten des Brennmaterials negativ beeinflussen, bei der natürlichen Trocknung durch Verdunstung in der Biomasse und mindern deren Wert als Brennstoff. Vor allem dieser Nachteil lässt sich zu einem erheblichen Teil vermeiden, wenn die feuchte Biomasse nach den bekannten Verfahren vor dem thermischen Trocknen ausgepresst wird, so dass das darin enthaltene Wasser mit einem erheblichen Teil der Schadstoffe daraus entfernt wird.

Die genannten Verfahren haben bei aller Vorteilhaftigkeit freilich auch ihre Nachteile. Vor allem sind sie recht energieaufwändig, belasten also die Energiebilanz des herzustellenden Brennstoffes negativ. Dies hat seinen Grund vor allem darin, dass das Auspressen frischer Biomasse, etwa von häufig recht harten Gräsern, erhebliche Kräfte erfordert und gleichwohl nur einen ungenügenden Feuchteentzug bewirkt, so dass die Entfernung noch sehr erheblicher Feuchtegehalte des bereits ausgepressten Materials der besonders energieaufwändigen thermischen Trocknung überlassen bleibt. Dies bedeutet zugleich, dass die verbrennungstechnisch schädlichen Inhaltsstoffe der Biomasse nur in eingeschränktem Masse entfernt werden, weil diese Stoffe großteils wasserlöslich sind und die thermische Trocknung sie daher nicht vermindert.

Hinzukommt, dass die für das Auspressen der Biomasse erforderlichen erheblichen Kräfte einen massiven Maschinenverschleiß mit sich bringen, dies umso mehr, als die Biomasse vielfach mit Abrieb erhöhenden Materialien wie Sand, anorganischen Abfällen und Ähnlichem verunreinigt ist, vor allem beispielsweise wenn es sich um Grasschnitt von landwirtschaftlichen oder von öffentlichen Verkehrsflächen handelt.

Hieraus folgt die Aufgabe, die bekannten Verfahren zur Herstellung von Brennstoffen aus in Form gepresster Biomasse aus feuchtem Ausgangsmaterial sowie die hierfür einzusetzenden Vorrichtungen so zu optimieren, dass bei geringerem Energieaufwand, vor allem für das thermische Trockenen, und bei geringst möglicher Belastung der Produktionsanlagen ein besserer Brennwert und verbesserte Brennstoffeigenschaften des hergestellten Brennstoffs erreicht werden.

Diese Aufgabe lösen die erfindungsgemäßen Verfahren mit den Merkmalen gemäß den Ansprüchen 1 bis 7 sowie die erfindungsgemäßen Vorrichtungen mit den Merkmalen gemäß den Ansprüchen 8 bis 11.

Die Lösung besteht darin, dass die Biomasse vor dem mechanischen Entwässern durch Mahlen, Passieren, Pürieren, Musen oder Ähnliches einer Feinstzerkleinerung unterworfen wird, derart, dass ein Mus/Püree/homogener Brei entsteht, dessen Konsistenz vorzugsweise breiig bis flüssig ist. Dabei kann der Zerkleinerungsvorgang in einem oder in mehreren Schritten erfolgen.

Dieser Zustand hat zunächst den Vorteil, dass die Biomasse besser weiterverarbeitbar, etwa (mit oder ohne Zugabe weiterer Flüssigkeit) pumpfähig ist und in dem Aufbereitungsverfahren leichter den weiteren Verarbeitungsschritten zugeführt werden kann.

Dies geht einher mit einer Veränderung oder weitgehenden Zerstörung der Zellstrukturen und damit dem Austritt von Zellflüssigkeit und deren Abscheidung (Absetzen, Vorentwässerung) sogar vor jeder weiteren mechanischen Entwässerung.

Vor allem aber erleichtern die aufgebrochenen Zellstrukturen das anschließende mechanische Entwässern ganz erheblich. Sie erleichtern nicht nur das Auspressen bei verringertem maschinellem Kraftaufwand ganz beträchtlich und ermöglichen so eine sehr viel stärkere mechanische Feuchtereduktion. Sie ermöglichen sogar den Einsatz alternativer, bei lediglich gröber zerkleinerter Biomasse ansonsten nicht wirklich wirksamer mechanischer Entwässerungsverfahren wie zum Beispiel den Einsatz von Filterpressen, Bandpressen oder Zentrifugen.

Wird eine Schnecken- oder Filterpresse oder eine Zentrifuge zum Entwässern eingesetzt, so reduziert sich die Restfeuchte, die beispielsweise bei Gras bei der mechanischen Entwässerung nach den bekannten Verfahren bei 64 - 70 % liegt, bei feinstzerkleinerter Masse auf 30 - 55 % oder sogar auf 30 - 45 %.

Hinzukommt, dass die Feinstzerkleinerung infolge des Aufbruchs der Zellstrukturen und der entsprechenden Vergrößerung der Oberfläche der Biomasseteilchen ein sehr viel wirksames anschließendes Trocknen der Biomasse ermöglicht.

Durch die Feinstzerkleinerung wird insgesamt mehr Wasser aus der Biomasse mechanisch bzw bereits im Wege der Vorentwässerung entfernt. Dadurch verringern sich die brenntechnisch bedenklichen Inhaltsstoffe der Biomasse, die bei geringerer (Vorentwässerung und) mechanischer Entwässerung und dementsprechend stärkerer thermischer Trocknung vermehrt darin verbleiben würden, beträchtlich. Dies hat eine verringerte Korrosion der Heizkessel, eine Steigerung des Heizwertes, Verringerung des Aschegehaltes und eine Erhöhung des Ascheschmelzpunktes, insgesamt also eine Schonung der mit dem gewonnenen Brennmaterial beschickten Heizanlagen zur Folge. Durch diese Verringerung der brenntechnisch schwierigen (brisanten) Inhaltstoffe können verschiedene Heizkessel mit der aufbereiteten Biomasse beschickt werden, die im herkömmlichen Sinn nicht für halmgutähnliche Biomasse ausgelegt waren.

Vor allem verbessert sich so aber die Energie- und Kostenbilanz des Herstellungsverfahrens beträchtlich, weil infolge der hohen mechanischen Entwässerung der Energieaufwand für die - an sich sehr energieaufwändige - thermische Trocknung deutlich zurückgeht. Die mechanische Entwässerung benötigt 5 - 15 % der Energie, die für die thermische Trocknung nötig ist, um dieselbe Wassermenge zu verdampfen.

Vorzugsweise wird zur Unterstützung insbesondere des Vorentwässerungsvorganges, d.h. vor dem eigentlichen mechanischen Entwässern, ein den Entwässerungsvorgang unterstützendes chemisches Entwässerungsmittel eingesetzt, d.h. der Biomasse zugesetzt.

In einer alternativen Ausgestaltung ist das erfindungsgemäße Verfahren zur Herstellung von Brennstoff aus in Form gepresster Biomasse mit feuchter Biomasse als Ausgangsmaterial dadurch gekennzeichnet, dass die Biomasse vor dem Zerkleinerungsvorgang einem Waschvorgang unterworfen wird. Dabei können die Sinkstoffe (Steine, Metall etc) abgeschieden werden. Aufschwimmende Fremdstoffe wie z.B. Plastik können von Hand oder automatisch an der Oberfläche des Waschwassers abgesammelt werden. Das Waschwasser kann im Kreislauf geführt werden.

Durch die mit dem Waschen verbundene Auswaschung der Biomasse verringert sich auch - ähnlich wie durch das mechanische Entwässern - der Gehalt an verbrennungstechnisch nachteiligen Inhaltsstoffen. Das Waschen verbessert also das Verbrennungsverhalten und das Ascheverhalten, insbesondere die Korrosionsanfälligkeit und den Ascheschmelzpunkt und hilft so, schädliche Einflüsse von der Verbrennungsanlage fernzuhalten.

Dies gilt vor allem auch, weil beim Waschen zugleich grobe Verunreinigungen wie Steine, Sand, Metalle, aber auch Umweltlasten, etwa Auspuffruß und Reifenabrieb bei Strassengrasschnitt, aus der Biomasse entfernt werden, wodurch zugleich die Zerkleinerungs- und die Pressvorrichtungen geschont werden, weil der erhöhte Verschleiß (bis hin zur Nichtdurchführbarkeit des Verfahrens), den solche Inhalte der Biomasse mit sich bringen, entfällt. Dies verbessert in jedem Falle die Kostenbilanz des erfindungsgemäßen Verfahrens, bringt aber auch eine Vergleichmä-βigung der Biomasse mit sich, die sich wiederum verbrennungstechnisch günstig auswirkt, also eine Erhöhung der Qualität des Produkts bedeutet. Das Waschen der Biomasse ermöglicht erst die Aufbereitung der Biomasse unabhängig von der Aufnahme (z.B. Sauggebläse oder Rechen...) und der Biomasseart (z.B. Biomasse aus der Landwirtschaft oder Strassenbegleitgrün) als Brennstoff. Auch diese Maßnahme ist also von ökonomischem Vorteil. Zugleich ergeben sich dabei ökologische Vorteile, weil die Verbrennung schädlicher Substanzen vermieden wird.

Schließlich ermöglicht das Waschen eine besonders effiziente Steuerung der Verarbeitungstemperatur, etwa derart, dass das Waschwasser so temperiert werden kann, dass dadurch die Zellstrukturen aufgebrochen werden (Blanchieren/Pochieren), wodurch wiederum die Weiterverarbeitung, insbesondere die Abscheidung des Wassers innerhalb der Biomasse (in der Biomasse gebundenes Wasser) erleichtert wird.

Wenn die Verfahrensschritte des Waschens und des Zerkleinerns in der Form der Feinstzerkleinerung miteinander kombiniert werden, potenzieren sich Ihre positiven Auswirkungen auf den Verfahrensablauf und auf das Produkt.

Vor dem mechanischen Entwässern kann die Biomasse vorentwässert werden. Dies empfiehlt sich insbesondere, wenn sie gewaschen wird, weil so das Waschwasser auf einfache Weise wieder abgeführt und die mechanische Entwässerungsvorrichtung kapazitätsmäßig entlastet wird. Die Vorentwässerung, die beispielsweise mit einer Filter-, Hydraulik-, Schnecken-, Vibrations-, oder einer Bandpresse, einer Zentrifuge erfolgen kann, bekommt ihren besonderen Sinn aber auch durch die vorgeschlagenen Verfahrensschritte zur Aufschließung der Zellstrukturen wie insbesondere das Feinstzerkleinem. Sie ermöglichen die Abfuhr eines erheblichen Anteils des Wassers ohne hohen Kraftaufwand und entlasten so den eigentlichen mechanischen Entwässerungsvorgang. Dies führt im Ergebnis zur Einsparung von Verschleiß und Energie und damit zu einer Verbesserung der Energie- und Kostenbilanz.

Dabei kann hilfreich sein, die Biomasse vor der Feinstzerkleinerung oder dem mechanischen Entwässerungsvorgang zu erhitzten (Pochieren, Blanchieren).

Das Erhitzen kann vor oder nach dem Zerkleinern, etwa bereits beim Waschen durch aufgeheiztes Waschwasser erfolgen. Hier sind Temperaturen bis 100° Grad bevorzugt. Alternativ kann das Erhitzen auch während der Zerkleinerung und/oder vor oder während der Vorentwässerung erfolgen. Die Wärme zum Erhitzen, oder Teilmengen davon, können im Wege der Energierückgewinnung aus dem Prozess bereitgestellt werden.

Auch das Erhitzen führt nämlich zu einem besseren Aufschluss der Zellstrukturen der Biomasse und damit zu einem erleichterten Austritt des Wassers, das so etwa schon im Rahmen der Vorentwässerung weitgehend ohne Pressen oder durch nachfolgendes Pressen, etwa im Rahmen der mechanischen Entwässerung, jedenfalls mit geringerem Kraft- und Energieaufwand abgeschieden werden kann.

Durch das Erhitzen verringert sich zugleich der Energieaufwand für das thermische Trocknen, das an sich besonders energieaufwändig ist. Damit verbessert sich die Energiebilanz noch mehr.

So kann, abhängig von der Entwässerungstechnik, der biogene Anteil im Presswasser variiert werden. Das Erhitzen kann durch den verbesserten Zellaufschluss zu einer Erhöhung des biogenen Anteils im Presswasser führen und damit dessen Wert erhöhen. Dieser Effekt wird durch die Feinstzerkleinerung verstärkt, die ihrerseits zu einem erhöhten Austritt der biogenen Anteile in das Presswasser führen kann.

Dies gilt sowohl für den Fall, dass das Presswasser als Düngemittel ausgebracht bzw. dazu weiterverarbeitet wird, als auch für den Fall, dass es für die Gaserzeugung genutzt wird. Sowohl der Düngewert als auch die Gasausbeute steigen durch die Erhöhung des biogenen Anteils in dem Presswasser.

Der Wert des beim mechanischen Entwässern abgeschiedenen Wassers für die vorerwähnten Zwecke (als Düngemittel bzw. als Ausgangsstoff zu deren Herstellung oder zum Vergären zur Gasgewinnung) kann weiter dadurch erhöht werden, dass es als Waschwasser verwendet, also mehrfach mit biogenem Material angereichert wird.

Da die Biomasse nach dem Zerkleinern, dem Vorentwässern und dem mechanischen Entwässern zur Feuchtereduktion im Zweifel so kompaktiert ist, dass sie in diesem Zustand schwer weiter zu trocknen wäre, wird es sich meist empfehlen, sie vor dem thermischen Trocknen einem dem mechanischen Entwässerungsvorgang nachgelagerten zweiten Zerkleinerungsvorgang (Auflockerungsvorgang) zu unterwerfen, durch den die durch das mechanische Entwässern kompaktierte Masse wieder aufgelockert, unter Umständen aber auch weiter zerkleinert werden kann.

Gegenstand der Erfindung sind weiter die Vorrichtungen bzw. apparativen Aufbauten und ihre Verwendung zur Durchführung der erfindungsgemäßen Verfahren.

Im Einzelnen geht es dabei um
1. Eine Vorrichtung zur Herstellung von Brennstoff aus in Form gepresster Biomasse zur Durchführung des Verfahrens nach einem der Ansprüche 1 bis 7, bestehend aus einer Einrichtung zum Formpressen der Biomasse, dieser vorgeschaltet eine Einrichtung zum Trocknen der Biomasse, dieser vorgeschaltet eine Einrichtung zum mechanischen Entwässern der Biomasse zur Verminderung ihres Feuchtegehalts und dieser vorgeschaltet eine Einrichtung zur Zerkleinerung der Biomasse, die eine Feinstzerkleinerung bewirkt.
2. Eine Vorrichtung wie zuvor unter 1. beschrieben, bei der der Einrichtung zum Zerkleinern der Biomasse eine Einrichtung zum Waschen der Biomasse vorgeschaltet ist, zur Durchführung des Verfahrens nach einem der Ansprüche 1 bis 7.
3. Eine Vorrichtung wie zuvor unter 1. und 2. beschrieben, bei der der Einrichtung zum mechanischen Entwässern eine Einrichtung zum Vorentwässern der Biomasse vorgeschaltet ist.
4. Eine Vorrichtung wie zuvor unter 1. bis 9. beschrieben, die eine der Trocknungseinrichtung vorgeschaltete, der Einrichtung zum mechanischen Entwässern nachgeschaltete weitere Einrichtung zum Zerkleinern (Auflockern) der Biomasse umfasst.

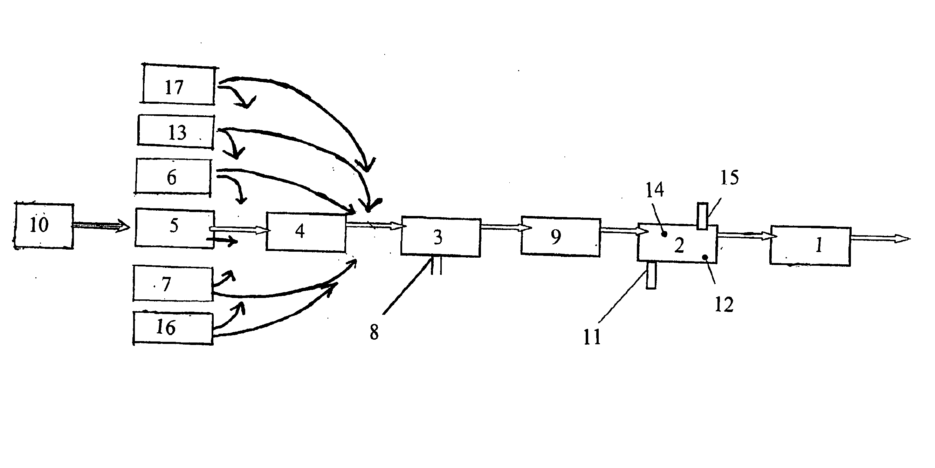

Die Erfindung wird im Folgenden an Hand der einzigen Zeichnung näher erläutert:

Sie zeigt eine Formpresseinrichtung 1 zur Herstellung der Brennstoffpresslinge, der eine Trocknungseinrichtung 2 zum thermischen Trocknen der zu verpressenden Biomasse vorgeschaltet ist.

Die Trocknungseinrichtung 2 verfügt über Feuchtigkeitsmesser 12 zur sachgerechten Einstellung der gewünschten Trockenheitsgrade der zu verpressenden Biomasse und einen Temperatursensor 14 zur optimalen Steuerung des Trockenvorganges. Außerdem verfügt die Trocknungseinrichtung 2 über eine Fluidleitung 11 zum Ableiten anfallender Feuchtigkeit und eine Abgasableitung 15 zum Ableiten von beim Trocknen entstehenden Gasen.

Der Trocknungseinrichtung 2 ist eine Einrichtung zum mechanischen Entfeuchten (Pressen o.ä.) 3 vorgeschaltet, mittels derer der feuchten Biomasse durch Pressen, zentrifugieren o.ä möglichst viel Feuchtigkeit mechanisch entzogen wird, um so den sehr viel energieaufwändigeren thermischen Trockenvorgang wirtschaftlicher zu gestalten.

Die Entfeuchtungseinrichtung 3 verfügt - wie die Trocknungseinrichtung 2 - über eine Fluidableitung 8, mittels derer das beim mechanischen Entwässern anfallende Abwasser abgeleitet und gegebenenfalls einer weiteren Verwendung zugeführt werden kann. Als solche weitere Verwendung kommt der Einsatz als landwirtschaftliches Düngemittel oder auch die Weiterverarbeitung hierzu oder die Fermentation zur Gasgewinnung in Betracht.

Da das mechanische Entfeuchten der Biomasse typischerweise zu deren Kompaktierung führt, die die weitere Verarbeitung, insbesondere das anschließende thermische Trocknen erschweren würde, kann im Anschluss an die mechanische Entfeuchtungseinrichtung 3 und vor der thermischen Trocknungseinrichtung 2 eine weitere Zerkleinerungseinrichtung 9 als Auflockerungsvorrichtung für die Biomasse vorgesehen sein.

In jedem Falle wird die Biomasse, um ihre mechanische Entfeuchtung und das thermische Trocknen sowie die weitere Verarbeitung zu erleichtern und eine Biomasse möglichst homogener Struktur zu erzielen, vor der mechanischen Entwässerung in einer Zerkleinerungseinrichtung 4 zerkleinert. Diese Zerkleinerung ist eine Feinstzerkleinerung.

Die Biomasse wird der Zerkleinerungseinrichtung 4 von der Sammeleinrichtung 10 zugeführt, in der die Biomasse zum Zwecke ihrer Verarbeitung vorgehalten wird, Die Sammeleinrichtung kann zugleich als Einrichtung zum Mischen verschiedener Biomasseaufkommen gestaltet oder eine solche Mischeinrichtung 16 kann gesondert vorgesehen sein.

Zwischen der Sammeleinrichtung 10 und der mechanischen Entfeuchtungseinrichtung 3 können eine Reihe weiterer Einrichtungen vorgesehen sein. Diese können - wie durch die Pfeile zu Bezugszeichen 5, 6, 7, 13, 16 in der Zeichnung angedeutet - der Zerkleinerungseinrichtung 4 - wahlweise vor- oder nachgeschaltet sein:

So kann nach oder auch vor der Zerkleinerungseinrichtung 4 eine Einrichtung 13 zum Abscheiden von Verunreinigungen wie Sand und Steinen vorgesehenen sein. Dabei wird es sich meist empfehlen, sie der Zerkleinerungseinrichtung 4 vorzuschalten, weil deren Zerkleinerungswerkzeuge so geschont werden.

In einer weiteren Ausgestaltung der Erfindung kann eine Wascheinrichtung 5 zum Waschen der Biomasse vorgesehen sein. Das Waschen wird vor dem Feinstzerkleinem stattfinden und die Anlage entsprechend aufgebaut sein. Mit dem Waschvorgang wird dann zugleich die Abscheidung von Sand und Steinen und anderen groben Verunreinigungen erfolgen.

Der mechanischen Entfeuchtungseinrichtung 3 kann eine Vorentwässerungseinrichtung 6 vorgeschaltet sein. Diese dient der Entlastung der nachfolgenden Entfeuchtungseinrichtung 3 durch Abscheiden der Feuchteanteile, die ohne zusätzliche mechanische Vorkehrungen wie Pressen oä abgeschieden werden können. Die Vorentwässerungseinrichtung 6 kann, wenn es um die Vorentwässerung von Hause aus sehr nasser Biomasse geht, der Zerkleinerungseinrichtung 4 vorgeschaltet sein. Sie kann aber auch nach der Zerkleinerung in der Zerkleinerungseinrichtung 4 oder an beiden Stellen vorgesehen sein, vor allem, weil die Zerkleinerung eine Feinstzerkleinerung ist, bei der die Biomasse eine breiige, etwa gar eine fließfähige Konsistenz erhält, die ein Vorentwässern ohne zusätzliche mechanische Eingriffe ermöglicht und sinnvoll macht.

Um diese Vorgänge zu unterstützen kann die Biomasse vor dem mechanischen Entwässern erhitzt werden, wozu vor der Entfeuchtungseinrichtung 3 eine Erhitzungseinrichtung 7 vorgesehen sein kann.

Schließlich kann der mechanischen Entwässerung eine Fermentation in einer Fermentationsanlage 17 zur Gasgewinnung vorausgehen.

### Bezugszeichenliste:

- 1.: Formpresseinrichtung
- 2.: Trocknungseinrichtung
- 3.: Entfeuchtungseinrichtung/Einrichtung zum mechanischen Entfeuchten
- 4.: Zerkleinerungseinrichtung
- 5.: Wascheinrichtung
- 6.: Vorentwässerungseinrichtung
- 7.: Erhitzungseinrichtung
- 8.: Fluidableitung der Entfeuchtungseinrichtung
- 9.: weitere Zerkleinerungseinrichtung
- 10.: Sammeleinrichtung /Mischeinrichtung
- 11.: Fluidableitung der Trocknungseinrichtung
- 12.: Feuchtigkeitsmesser
- 13.: Sandabscheider
- 14.: Temperatursensor
- 15.: Abgasableitung
- 16.: Mischeinrichtung
- 17.: Fermentationseinrichtung

## Patentansprüche

1. Verfahren zur Herstellung von Brennstoff aus in Form gepresster Biomasse, bei dem die feuchte Biomasse vor dem Formpressvorgang einem Trocknungsvorgang, vor dem Trocknungsvorgang einem mechanischen Entwässerungsvorgang zur Reduktion des Feuchtegehalts und vor dem mechanischen Entwässerungsvorgang einem Zerkleinerungsvorgang unterworfen wird, **dadurch gekennzeichnet, dass** die Biomasse im Zerkleinerungsvorgang feinstzerkleinert wird.

2. Verfahren nach Anspruch 1, **dadurch gekennzeichnet, dass** die Biomasse vor der Feinstzerkleinerung gewaschen wird.

3. Verfahren nach einem der vorigen Ansprüche, **dadurch gekennzeichnet, dass** die Biomasse vor dem mechanischen Entwässerungsvorgang vorentwässert wird.

4. Verfahren nach einem der vorigen Ansprüche, **dadurch gekennzeichnet, dass** die Biomasse vor dem mechanischen Entwässerungsvorgang erhitzt wird.

5. Verfahrens nach Anspruch 2 bis 4 **dadurch gekennzeichnet, dass** das beim mechanischen Entwässerungsvorgang gewonnene Wasser als Waschwasser verwendet wird.

6. Verfahren nach einem der vorigen Ansprüche, **dadurch gekennzeichnet, dass** die Biomasse einem dem mechanischen Entwässerungsvorgang nachgelagerten weiteren Zerkleinerungsvorgang zu ihrer Auflockerung unterworfen wird.

7. Verfahren nach einem der vorigen Ansprüche, **dadurch gekennzeichnet, dass** die Biomasse vor dem mechanischen Entwässerungsvorgang zur Gasgewinnung vergoren wird und das bei dem mechanischen Entwässerungsvorgang anfallende Wasser der Verwendung als oder der Weiterverarbeitung zu landwirtschaftlichen Düngemitteln zugeführt wird.

8. Vorrichtung zur Herstellung von Brennstoff aus in Form gepresster Biomasse zur Durchführung des Verfahrens nach einem der Ansprüche 1 bis 7, aufweisend eine Einrichtung zum Formpressen der Biomasse, dieser vorgeschaltet eine Einrichtung zum Trocknen der Biomasse, dieser vorgeschaltet eine Einrichtung zum mechanischen Entwässern der Biomasse zur Verminderung ihres Feuchtegehalts und dieser vorgeschaltet eine Einrichtung zur Zerkleinerung der Biomasse, die eine Feinstzerkleinerung bewirkt.

9. Vorrichtung nach Anspruch 8 zur Durchführung des Verfahrens nach einem der Ansprüche 2 bis 7, bei der der Einrichtung zum Feinstzerkleinern der Biomasse eine Einrichtung zum Waschen der Biomasse vorgeschaltet ist.

10. Vorrichtung nach einem der Ansprüche 8 oder 9, **dadurch gekennzeichnet, dass** die Vorrichtung eine der Einrichtung zum mechanischen Entwässern vorgeschaltete Einrichtung zum Vorentwässern der Biomasse aufweist.

11. Vorrichtung nach einem der Ansprüche 8 bis 10, **dadurch gekennzeichnet, dass** die Vorrichtung eine der Trocknungseinrichtung vorgeschaltete, der Einrichtung zum mechanischen Entwässern nachgeschaltete weitere Einrichtung zum Zerkleinern der Biomasse umfasst.

## Claims

1. Method for producing fuel from compression-moulded biomass in which, before the compression-moulding operation, the moist biomass is subjected to a drying operation, before the drying operation it is subjected to a mechanical dewatering operation to reduce the moisture content and before the mechanical dewatering operation it is subjected to a comminuting operation, **characterized in that** the biomass is comminuted extremely finely in the comminuting operation.

2. Method according to Claim 1, **characterized in that** the biomass is washed before the extremely fine comminution.

3. Method according to one of the preceding claims, **characterized in that** the biomass is pre-dewatered before the mechanical dewatering operation.

4. Method according to one of the preceding claims, **characterized in that** the biomass is heated before the mechanical dewatering operation.

5. Method according to Claims 2 to 4, **characterized in that** the water obtained during the mechanical dewatering operation is used as washing water.

6. Method according to one of the preceding claims, **characterized in that**, downstream of the mechanical dewatering operation, the biomass is subjected to a further comminuting operation to loosen it.

7. Method according to one of the preceding claims, **characterized in that**, before the mechanical dewatering operation, the biomass is fermented to recover gas and the water occurring during the mechanical dewatering operation is passed on for use as, or further processing into, agricultural fertilizers.

8. Apparatus for producing fuel from compression-moulded biomass for carrying out the method according to one of Claims 1 to 7, having a device for compression-moulding the biomass, upstream thereof a device for drying the biomass, upstream thereof a device for mechanically dewatering the biomass to reduce its moisture content and upstream thereof a device for comminuting the biomass, which brings about extremely fine comminution.

9. Apparatus according to Claim 8 for carrying out the method according to one of Claims 2 to 7, in which the device for extremely finely comminuting the biomass is preceded by a device for washing the biomass.

10. Apparatus according to either of Claims 8 and 9, **characterized in that** the apparatus has a device for pre-dewatering the biomass arranged upstream of the device for mechanical dewatering.

11. Apparatus according to one of Claims 8 to 10, **characterized in that** the apparatus comprises a further device for comminuting the biomass arranged upstream of the drying device and downstream of the device for mechanical dewatering.

## Revendications

1. Procédé de fabrication d'un combustible à partir d'une biomasse comprimée dans un moule, selon lequel la biomasse humide est soumise avant le processus de moulage par compression à un processus de séchage, avant le processus de séchage à un processus de déshydratation mécanique pour la réduction de la teneur en humidité et avant le processus de déshydratation mécanique à un processus de broyage, **caractérisé en ce que** la biomasse est broyée finement pendant le processus de broyage.

2. Procédé selon la revendication 1, **caractérisé en ce que** la biomasse est lavée avant le broyage fin.

3. Procédé selon l'une quelconque des revendications précédentes, **caractérisé en ce que** la biomasse est pré-déshydratée avant le processus de déshydratation mécanique.

4. Procédé selon l'une quelconque des revendications précédentes, **caractérisé en ce que** la biomasse est chauffée avant le processus de déshydratation mécanique.

5. Procédé selon les revendications 2 à 4, **caractérisé en ce que** l'eau récupérée lors du processus de déshydratation mécanique est utilisée en tant qu'eau de lavage.

6. Procédé selon l'une quelconque des revendications précédentes, **caractérisé en ce que** la biomasse est soumise à un processus de broyage supplémentaire pour son ameublissement après le processus de déshydratation mécanique.

7. Procédé selon l'une quelconque des revendications précédentes, **caractérisé en ce que** la biomasse est fermentée pour l'extraction de gaz avant le processus de déshydratation mécanique et l'eau formée pendant le processus de déshydratation mécanique est introduite dans l'utilisation en tant que ou la transformation en engrais agricole.

8. Dispositif pour la fabrication d'un combustible à partir d'une biomasse comprimée dans un moule pour la réalisation du procédé selon l'une quelconque des revendications 1 à 7, comprenant une unité pour le moulage par compression de la biomasse, une unité pour le séchage de la biomasse en amont de celle-ci, une unité pour la déshydratation mécanique de la biomasse pour réduire sa teneur en humidité en amont de celle-ci et une unité pour le broyage de la biomasse, qui réalise un broyage fin, en amont de celle-ci.

9. Dispositif selon la revendication 8 pour la réalisation du procédé selon l'une quelconque des revendications 2 à 7, dans lequel une unité de lavage de la biomasse est connectée en amont de l'unité pour le broyage fin de la biomasse.

10. Dispositif selon l'une quelconque des revendications 8 ou 9, **caractérisé en ce que** le dispositif comprend une unité de pré-déshydratation de la biomasse connectée en amont de l'unité de déshydratation mécanique.

11. Dispositif selon l'une quelconque des revendications 8 à 10, **caractérisé en ce que** le dispositif comprend une unité supplémentaire de broyage de la biomasse connectée en amont de l'unité de séchage et en aval de l'unité de déshydratation mécanique.
